# EUROPEAN PATENT APPLICATION

(11) **EP 3 358 215 A1**
(43) Date of publication of application: **08.08.2018**
(21) Application number: 16889918.5
(22) Date of filing: 24.11.2016
(51) Int. Cl.: F16G 5/16

(54) **TRANSMISSION BELT**

(30) Priority: 12.02.2016 JP 201625303; 28.07.2016 JP 2016149027
(71) Applicant: Aisin AW Co., Ltd., Anjo-shi, Aichi 444-1192 (JP)
(72) Inventor: OCHI, Akira, Anjo-shi Aichi 444-1192 (JP); KAWANO, Kenji, Anjo-shi Aichi 444-1192 (JP); SATO, Yuki, Anjo-shi Aichi 444-1192 (JP); NAKAMURA, Ryo, Anjo-shi Aichi 444-1192 (JP); TOKUNAGA, Junichi, Anjo-shi Aichi 444-1192 (JP); HATTORI, Masashi, Anjo-shi Aichi 444-1192 (JP)
(74) Representative: Kramer Barske Schmidtchen Patentanwälte PartG mbB
(86) International application number: PCT/JP2016/084754
(87) International publication number: WO 2017/138217

(57) **Abstract**

Elements of a power transfer belt each has a pair of pillar portions that extend from both sides of a saddle surface in the width direction, and a pair of side surfaces formed so as to extend away from each other from the inner peripheral side toward the outer peripheral side of a ring. The pair of side surfaces each include a first side surface provided on the pillar portion and a second side surface formed so as to be continuous with the first side surface and positioned on the inner peripheral side with respect to the first side surface. An angle formed by the pair of second side surfaces is generally equal to an opening angle of V grooves of pulleys of a continuously variable transmission, and an angle formed by the pair of first side surfaces is smaller than the angle formed by the pair of second side surfaces.

## Description

### TECHNICAL FIELD

The present disclosure relates to a power transfer belt that includes a plurality of elements and a ring that binds the plurality of elements annularly. The power transfer belt is wound in V grooves of a pair of pulleys of a continuously variable transmission to transfer power.

### BACKGROUND ART

There has hitherto been known a power transfer belt that includes a plurality of elements, each of which has a base portion, which has a saddle surface and in which both left and right side surfaces in the width direction are formed as tapered inclined surfaces, and a pillar portion formed at both end portions in the width direction of the base portion to extend upward (see Patent Document 1, for example). The power transfer belt transfers torque between a drive side pulley and a driven side pulley of a belt-type continuously variable transmission with the entire tapered inclined side surfaces of each of the elements frictionally contacting the surfaces of a belt winding groove (V groove) of the drive side pulley or the driven side pulley. A recessed portion dented toward the saddle surface which contacts a ring is formed in the lower portion of each of the elements between the center portion in the width direction and each of the side surfaces. With such a power transfer belt, in transferring torque, a force (compression force) from the pulley (sheave) acts on generally the entire side surfaces of the element, and a force (tension) from the ring acts on the saddle surface of the element.

### [Related Art Documents]

### [Patent Documents]

[Patent Document 1] Japanese Patent Application Publication No. 2008-51327 (JP 2008-51327 A)

### SUMMARY OF THE INVENTION

In the power transfer belt according to the related art described above, in transferring torque, generally the entire side surfaces of each of the elements frictionally contact the surfaces of the belt winding groove. Thus, in the case where an intersection line between a plane that contacts the saddle surface at the top portion of the saddle surface and a side surface of the element is used as a reference, in transferring torque, each of the elements is subjected to a first bending moment that acts to lean the pillar portions toward the center in the width direction of the element using the intersection line as a support point. The first bending moment is based on a force from the pulley that acts on the side surfaces on the outer side in the radial direction of the ring with respect to the intersection line. Each of the elements is subjected to a second bending moment, which is in the opposite direction of the first bending moment, and which acts to lean the pillar portions toward the pulley using the intersection line as a support point. The second bending moment is based on a force from the pulley that acts on the side surfaces on the inner side in the radial direction of the ring with respect to the intersection line. In transferring torque, in addition, each of the elements is subjected to a third bending moment that acts to lean the pillar portions toward the center in the width direction of the element using the intersection line as a support point. The third bending moment is based on a force from the ring. Therefore, with the power transfer belt according to the related art described above, the first and third bending moments may overcome the second bending moment to increase the amount of deformation of the pillar portions and lower the durability.

It is therefore a main object of the invention according to the present disclosure to improve the durability of a power transfer belt by suppressing deformation of elements during power transfer.

The present disclosure provides a power transfer belt that includes a plurality of elements and a ring that binds the plurality of elements annularly, the power transfer belt being wound in V grooves of a pair of pulleys of a continuously variable transmission to transfer power, in which: the elements each have a saddle surface that contacts the ring, a pair of pillar portions that extend from both sides of the saddle surface in a width direction in a direction from an inner peripheral side toward an outer peripheral side of the ring, and a pair of side surfaces formed so as to extend away from each other from the inner peripheral side toward the outer peripheral side of the ring; the pair of side surfaces each include a first side surface provided on the pillar portion and a second side surface formed so as to be continuous with the first side surface and positioned on the inner peripheral side with respect to the first side surface; and an angle formed by a pair of the second side surfaces is generally equal to an opening angle of the V grooves, and an angle formed by a pair of the first side surfaces is smaller than the angle formed by the pair of the second side surfaces.

When power is transferred between the pair of pulleys by the power transfer belt according to the present disclosure, the second side surface of the side surface of each of the elements can be caused to abut against the surface of the V groove, and the first side surface on the pillar portion side can be prevented from contacting the surface of the V groove. Consequently, it is possible to prevent a first bending moment, which acts to lean the pillar portion toward the center in the width direction of the element using the boundary between the first and second side surfaces as a support point, from being substantially generated, by preventing direct application of a force from the pulley to the first side surface, that is, the pillar portion, of each of the elements when power is transferred between the pair of pulleys. With the power transfer belt according to the present disclosure, further, in transferring power, at least a part of a third bending moment which is based on a force from the ring and which acts to lean the pillar portion toward the center in the width direction of the element using the boundary between the first and second side surfaces as a support point can be canceled out using a second bending moment which is based on a force from the pulley that acts on the second side surface, and which acts to lean the pillar portion toward the pulley using the boundary between the first and second side surfaces as a support point. As a result, it is possible to improve the durability of the power transfer belt by suppressing deformation of the element, that is, deformation of the pillar portion and accompanying deformation of components around the second side surface, during power transfer.

### BRIEF DESCRIPTION OF THE DRAWINGS

[FIG. 1] FIG. 1 is a schematic diagram illustrating an example of a continuously variable transmission that includes a power transfer belt according to the present disclosure.
[FIG. 2] FIG. 2 is a partial sectional view illustrating the power transfer belt according to the present disclosure.
[FIG. 3] FIG. 3 is an enlarged view illustrating an element included in the power transfer belt according to the present disclosure.

### MODES FOR CARRYING OUT THE INVENTION

Now, an embodiment of the invention according to the present disclosure will be described with reference to the drawings.

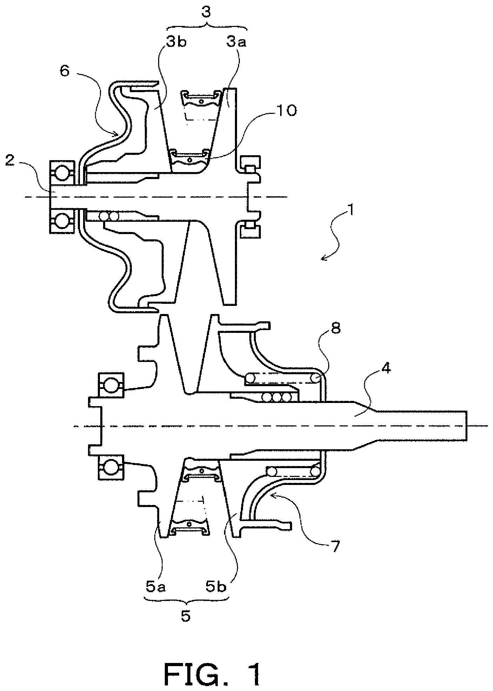

FIG. 1 illustrates a schematic configuration of a continuously variable transmission 1 that includes a power transfer belt 10 according to the present disclosure. The continuously variable transmission 1 illustrated in the drawing includes a primary shaft 2 that serves as a drive side rotary shaft, a primary pulley 3 provided on the primary shaft 2, a secondary shaft 4 that serves as a driven side rotary shaft disposed in parallel with the primary shaft 2, and a secondary pulley 5 provided on the secondary shaft 4. As illustrated in the drawing, the power transfer belt 10 is wound around a pulley groove (V groove) of the primary pulley 3 and a pulley groove (V groove) of the secondary pulley 5.

The primary shaft 2 is coupled to an input shaft (not illustrated) coupled to a power generation source such as an engine (internal combustion engine) via a forward/reverse switching mechanism (not illustrated). The primary pulley 3 includes a fixed sheave 3a formed integrally with the primary shaft 2, and a movable sheave 3b supported by the primary shaft 2 via a ball spline or the like so as to be slidable in the axial direction. Meanwhile, the secondary pulley 5 includes a fixed sheave 5a formed integrally with the secondary shaft 4, and a movable sheave 5b supported by the secondary shaft 4 via a ball spline or the like so as to be slidable in the axial direction and urged in the axial direction by a return spring 8.

The continuously variable transmission 1 further includes a primary cylinder 6 which is a hydraulic actuator that changes the groove width of the primary pulley 3, and a secondary cylinder 7 which is a hydraulic actuator that changes the groove width of the secondary pulley 5. The primary cylinder 6 is formed behind the movable sheave 3b of the primary pulley 3. The secondary cylinder 7 is formed behind the movable sheave 5b of the secondary pulley 5. Working oil is supplied from a hydraulic control device (not illustrated) to the primary cylinder 6 and the secondary cylinder 7 in order to vary the groove widths of the primary pulley 3 and the secondary pulley 5. This makes it possible to continuously vary torque transferred from the engine or the like to the primary shaft 2 via the input shaft and the forward/reverse switching mechanism and to output the resultant torque to the secondary shaft 4. The torque which is output to the secondary shaft 4 is transferred to drive wheels (neither of which is illustrated) of the vehicle via a gear mechanism, a differential gear, and drive shafts.

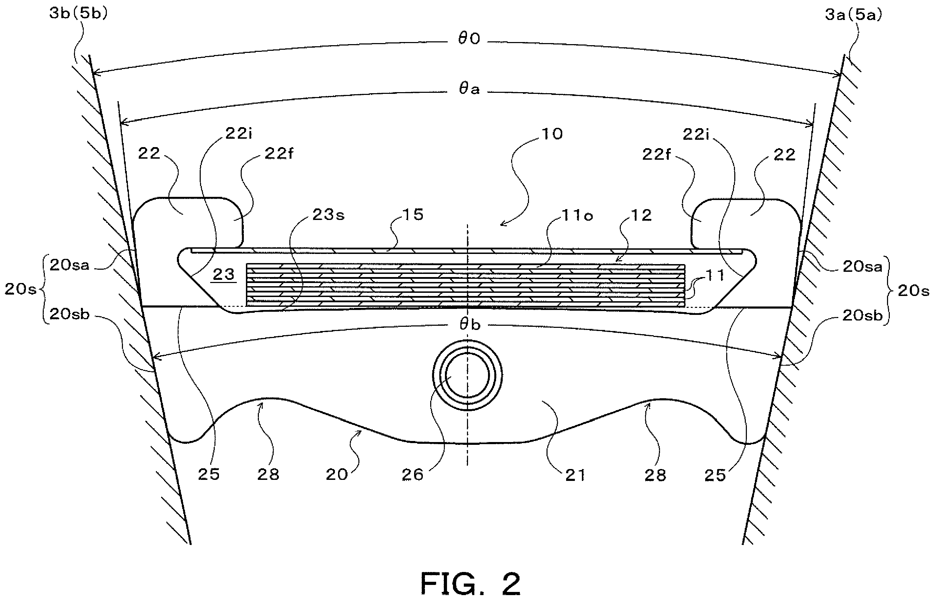

FIG. 2 is a partial sectional view illustrating the power transfer belt 10. As illustrated in the drawing, the power transfer belt 10 includes one stacked ring 12 constituted by stacking a plurality of (nine in the present embodiment) elastically deformable ring materials 11 in the thickness direction (ring radial direction), one retainer ring 15, and a plurality of (e.g. several hundreds of) elements 20 arranged (bound) annularly along the inner peripheral surface of the stacked ring 12.

The plurality of elastically deformable ring materials 11 which constitute the stacked ring 12 are cut out from a drum made of a steel sheet, and processed so as to have generally equal thicknesses and different circumferential lengths determined in advance. The retainer ring 15, which is elastically deformable, is cut out from a drum made of a steel sheet, for example, and has a thickness that is generally equal to or smaller than that of the ring material 11. In addition, the retainer ring 15 has an inner peripheral length that is longer than the outer peripheral length of an outermost ring material 11o of the stacked ring 12. Consequently, as illustrated in FIG. 2, an annular clearance is formed between the outer peripheral surface of the outermost ring material 11o and the inner peripheral surface of the retainer ring 15 when the stacked ring 12 and the retainer ring 15 are disposed concentrically (a no-load state in which no tension acts).

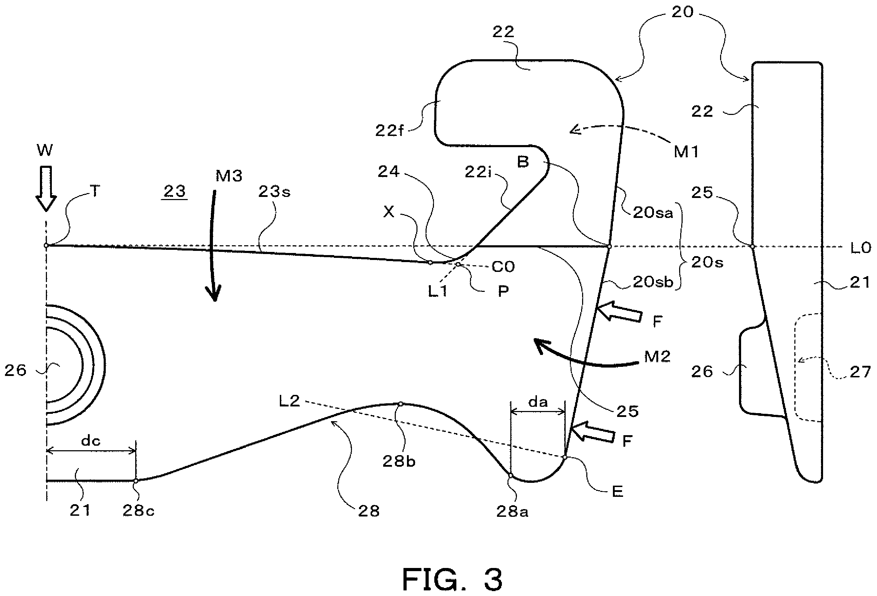

Each of the elements 20 has been stamped out from a steel sheet by pressing, for example. As illustrated in FIGS. 2 and 3, each of the elements 20 has a body portion 21 that extends horizontally in the drawing, a pair of pillar portions 22 that extend in the same direction from both end portions of the body portion 21, and a ring accommodation portion (recessed portion) 23 defined between the pair of pillar portions 22 so as to open on the free end side of the pillar portions 22. The pair of pillar portions 22 extend outward (in a direction from the inner peripheral side toward the outer peripheral side of the stacked ring 12, i.e. upward in the drawing) in the radial direction of the stacked ring 12 from both sides, in the width direction, of a saddle surface 23s which is the bottom surface of the ring accommodation portion 23. Hook portions 22f that project in the width direction of the saddle surface 23s are formed at free end portions of the pillar portions 22. The pair of hook portions 22f face each other with a spacing that is slightly larger than the width of the stacked ring 12 (ring materials 11) and that is smaller than the width of the retainer ring 15.

As illustrated in FIG. 2, the stacked ring 12 is disposed in the ring accommodation portion 23, and the saddle surface 23s of the ring accommodation portion 23 contacts the inner peripheral surface of the stacked ring 12, that is, the innermost ring material 11. The saddle surface 23s has a transversely symmetrical convex curved surface shape (crowning shape) in which the saddle surface 23s is gently inclined downward in the drawing from the center portion in the width direction as a top portion T (see FIG. 3) toward the outer side in the width direction. Consequently, it is possible to center the stacked ring 12 by applying a centripetal force directed to the top portion T to the stacked ring 12 through friction with the saddle surface 23s. It should be noted, however, that the saddle surface 23s may include a plurality of convex curved surfaces curved outward in the radial direction of the stacked ring 12.

Further, the retainer ring 15 is elastically deformed to be fitted in the ring accommodation portion 23 via the gap between the pair of hook portions 22f of each of the elements 20. The retainer ring 15 is disposed between the outer peripheral surface of the outermost ring material 11o (see FIG. 2) of the stacked ring 12 and the hook portions 22f of each of the elements 20 (on the radially outer side of the stacked ring 12 and on the radially inner side of the hook portions 22f of each of the elements 20) to surround the stacked ring 12, and restricts slipping-off of each of the elements 20 from the stacked ring 12. Consequently, the plurality of elements 20 are bound (arranged) annularly along the inner peripheral surface of the stacked ring 12. In addition, both end portions (outer peripheral surface) of the retainer ring 15 in the width direction are supported as appropriate from the radially outer side by the hook portions 22f of each of the elements 20. In the present embodiment, one or more openings (long holes) (not illustrated) are formed in the retainer ring 15. Consequently, the assemblability of the retainer ring 15 to the elements 20 can be secured by making the retainer ring 15 easily elastically deformable.

In addition, each of the pillar portions 22 has a flat inner surface 22i inclined away from the saddle surface 23s toward the outer side in the radial direction of the stacked ring 12. A concave curved surface 24 is formed between the saddle surface 23s and the inner surface 22i of each of the pillar portions 22, and is smoothly continuously with the saddle surface 23s and the inner surface 22i. The concave curved surface 24 is a concave circular column surface in the present embodiment. As illustrated in FIG. 3, as the element 20 is viewed in plan, the concave curved surface 24 is positioned on the outer side in the radial direction of the stacked ring 12 with respect to a crossing point P between a curve CO (e.g. an elliptical arc or a circular arc) that forms the saddle surface 23s and an extension line L1 of the inner surface 22i of the pillar portion 22, and on the inner side in the radial direction of the stacked ring 12 with respect to a line L0 that extends in the width direction of the saddle surface 23s through the top portion T. The inner surface 22i of each of the pillar portions 22 may be formed in the shape of a curved surface (a concave curved surface or a convex curved surface), or may be formed in a stepped shape, as long as a region of the pillar portion 22 positioned on the outer peripheral side of the stacked ring 12 is closer to a first side surface than a region of the pillar portion 22 positioned on the inner peripheral side of the stacked ring 12.

As illustrated in FIG. 3, further, the element 20 is formed such that a portion of the element 20 on the pillar portion 22 side, that is, on the outer side in the radial direction of the stacked ring 12, has a generally constant thickness, and such that, as the element 20 is viewed in plan, the thickness of the element 20 is gradually reduced from the line L0 (a plane that contacts the saddle surface 23s at the top portion T) which extends in the width direction of the saddle surface 23s through the top portion T toward the side opposite to the pillar portion 22, that is, toward the inner side in the radial direction of the stacked ring 12. The element 20 according to the present embodiment is formed such that the front surface of the element 20 is brought closer to the back surface, which is flat, from the line L0 toward the inner side in the radial direction of the stacked ring 12. A rocking edge 25, at which the elements 20 adjacent to each other in the advancing direction of the power transfer belt 10 contact each other and which serves as a support point for turning motion of such elements 20, is formed at the boundary portion at which the thickness of the element 20 is varied. That is, the rocking edge 25 is positioned on the line L0 which extends in the width direction of the saddle surface 23s through the top portion T (included in a plane that contacts the saddle surface 23s at the top portion T). Additionally, one protrusion (dimple) 26 is formed at the center portion, in the width direction, of the front surface (one of the surfaces) of the body portion 21. A dent 27 (see FIG. 3) to be freely fitted with the protrusion 26 of an adjacent element 20 is formed on the back side of the protrusion 26.

In addition, the element 20 has a pair of side surfaces 20s formed so as to extend away from each other from the inner peripheral side toward the outer peripheral side of the stacked ring 12 (outer side in the radial direction of the stacked ring 12). As illustrated in FIGS. 2 and 3, each of the side surfaces 20s includes a first side surface 20sa positioned on the pillar portion 22 side, that is, on the opposite side (outer side) of the inner surface 22i of the pillar portion 22, and a second side surface 20sb formed so as to be continuous with the first side surface 20sa and positioned on the inner side in the radial direction of the stacked ring 12 with respect to the first side surface 20sa. In the present embodiment, the pair of first side surfaces 20sa are formed so as to extend away from each other toward the outer side in the radial direction of the stacked ring 12, as with the second side surfaces 20sb. Consequently, good strength of the pillar portions 22 can be secured.

As illustrated in FIG. 2, further, an angle θb formed by the pair of second side surfaces 20sb is determined so as to be generally equal to an opening angle θ0 of the pulley groove of the primary pulley 3 or the secondary pulley 5 (slightly larger than the design value of the opening angle θ0 in the present embodiment), and an angle θa formed by the pair of first side surfaces 20sa is determined so as to be smaller than the angle θb which is formed by the pair of second side surfaces 20sb. Consequently, the second side surfaces 20sb of the element 20 serve as torque transfer surfaces (flank surfaces) that transfer torque from the primary pulley 3 to the secondary pulley 5 through a friction force by frictionally contacting the surfaces of the pulley groove of the primary pulley 3 or the pulley groove of the secondary pulley 5 to receive a compression force from the pulley 3 or 5. In contrast, the pair of first side surfaces 20sa are basically prevented from contacting the surfaces of the pulley groove when torque is transferred from the primary pulley 3 to the secondary pulley 5 by the power transfer belt 10. In addition, as illustrated in FIG. 3, a boundary B between the first side surface 20sa and the second side surface 20sb is positioned on the line L0 which extends in the width direction of the saddle surface 23s through the top portion T of the saddle surface 23s (included in a plane that contacts the saddle surface 23s at the top portion T) as the element 20 is viewed in plan, as with the rocking edge 25.

In addition, two recessed portions 28 dented toward the saddle surface 23s are formed in an end portion (inner peripheral end portion) of the element 20 that extends in the width direction on the inner side in the radial direction of the stacked ring 12 with respect to the saddle surface 23s such that one recessed portion 28 is formed between the center portion (see the dash-and-dot line in FIGS. 2 and 3) in the width direction and each of the second side surfaces 20sb. Each of the recessed portions 28 is defined by combining a concave circular column surface and a flat surface, and formed such that the entire recessed portion 28 is closer to the second side surface 20sb than to the center portion in the width direction of the element 20 as illustrated in FIG. 3. That is, a spacing da between an end portion 28a of the recessed portion 28 on the side surface 20s side and the second side surface 20sb is smaller than a spacing dc between an end portion 28c of the recessed portion 28 on the center portion side and the center portion. Further, a deepest portion 28b of each of the recessed portions 28 is closer to the concave curved surface 24 and the second side surface 20sb than to the center portion in the width direction of the element 20, and is positioned on the saddle surface 23s side with respect to a line L2 (plane) that orthogonally crosses the second side surface 20sb at an innermost peripheral end portion E (boundary with the bottom surface in the shape of a curved surface in the present embodiment) of a portion of the second side surface 20sb that contacts the pulley 3 or 5. The recessed portion 28 may be formed by only a curved surface.

When torque is transferred from the primary pulley 3 to the secondary pulley 5 by the power transfer belt 10 discussed above, the second side surface 20sb of the side surface 20s of each of the elements 20 can be caused to abut against a surface of the pulley groove, and the first side surface 20sa on the pillar portion 22 side can be prevented from contacting the surface of the pulley groove. Consequently, it is possible to prevent a first bending moment M1 (see the dash-double-dot line in FIG. 3), which acts to lean the pillar portion 22 toward the center in the width direction of the element 20 using the boundary B between the first and second side surfaces 20sa and 20sb as a support point, from being substantially generated, by preventing direct application of a force (compression force) from the primary pulley 3 or the like to the first side surface 20sa, that is, the pillar portion 22, of each of the elements 20 when torque is transferred from the primary pulley 3 to the secondary pulley 5.

In the power transfer belt 10, in addition, as illustrated in FIG. 3, in transferring torque, a force (compression force) F from the primary pulley 3 or the like acts on the second side surface 20sb of the side surface 20s of each of the elements 20, and a force (tension) W from the stacked ring 12 acts on the saddle surface 23s of each of the elements 20 from the outer side toward the inner side in the radial direction. Therefore, in transferring torque, each of the elements 20 is subjected to a second bending moment M2, which is in the clockwise direction in FIG. 3 and which acts to lean the pillar portion 22 toward the pulley 3 or 5 using the boundary B between the first and second side surfaces 20sa and 20sb as a support point. The second bending moment M2 is based on a force from the pulley 3 or 5 that acts on the second side surface 20sb. In transferring torque, further, each of the elements 20 is subjected to a third bending moment M3, which is in the counterclockwise direction in FIG. 3 and which acts to lean the pillar portion 22 toward the center in the width direction of the element 20 using the boundary B as a support point. The third bending moment M3 is based on the force W from the stacked ring 12. It should be noted, however, that in transferring torque, each of the elements 20 is not substantially subjected to the first bending moment M1 which acts to lean the pillar portion 22 toward the center in the width direction of the element 20 as discussed above. Thus, with the power transfer belt 10, it is possible to cancel out at least a part of the third bending moment M3 using the second bending moment M2, thereby suppressing deformation of each of the elements 20, that is, deformation of the pillar portion 22 and accompanying deformation of components around the second side surface 20sb, during torque transfer.

Additionally, the two recessed portions 28 which are dented toward the saddle surface 23s are formed in an inner peripheral end portion of each of the elements 20 such that one recessed portion 28 is formed between the center portion and each of the second side surfaces 20sb in the width direction. Consequently, the rigidity of a portion of the element 20 on the recessed portion 28 side with respect to the pillar portion 22 (line L0), that is, a part of the body portion 21, can be lowered. As a result, it is possible to cancel out the third bending moment M3 well using the second bending moment M2 by increasing the effect of the second bending moment M2. Thus, the durability of the power transfer belt 10 can be improved by suppressing deformation of each of the elements 20 during torque transfer.

In addition, the recessed portion 28 is formed such that the entire recessed portion 28 is closer to the second side surface 20sb than to the center portion in the width direction of the element 20, and the deepest portion 28b of the recessed portion 28 is closer to the concave curved surface 24 and the second side surface 20sb than to the center portion in the width direction of the element 20. Additionally, the deepest portion 28b of the recessed portion 28 is positioned on the saddle surface 23s side with respect to the line L2 which orthogonally crosses the second side surface 20sb at the innermost peripheral end portion E of the second side surface 20sb which is positioned on the opposite side of the boundary B from the first side surface 20sa. Consequently, it is possible to increase the effect of the second bending moment M2.

In the element 20, the first side surfaces 20sa on the pillar portion 22 side are also formed so as to extend away from each other from the inner peripheral side toward the outer peripheral side of the stacked ring 12 (outer side in the radial direction of the stacked ring 12). Thus, the spacing between the free end portions of the pair of pillar portions 22 can be increased. Thus, it is possible to increase the spacing in the width direction between the pair of hook portions 22f even if the amount of overlap between the hook portions 22f and the end portions of the retainer ring 15 in the width direction (area of overlapping portions of the hook portions 22f and the retainer ring 15) is secured sufficiently. As a result, the width of the stacked ring 12, which needs to pass between the pair of hook portions 22f, can be increased, and thus it is possible to further improve the power transfer efficiency of the power transfer belt 10. In the present embodiment, in addition, the inner surface 22i of each of the pillar portions 22 is positioned on the center side in the width direction with respect to the first side surface 20sa, and inclined so as to be brought closer to the first side surface 20sa from the inner peripheral side toward the outer peripheral side of the stacked ring 12. Consequently, a region of each of the inner surfaces 22i positioned on the outer peripheral side of the stacked ring 12 is closer to the first side surface 20sa than a region of the inner surface 22i positioned on the inner peripheral side of the stacked ring 12. As a result, it is possible to further increase the spacing in the width direction between the pair of hook portions 22f while securing a sufficient amount of overlap between the hook portions 22f and the end portions of the retainer ring 15.

Further, the boundary B between the first side surface 20sa and the second side surface 20sb is positioned on the rocking edge 25 of the element 20, and the rocking edge 25 and the boundary B are positioned on the line L0 which extends in the width direction through the top portion T of the saddle surface 23s (convex curved surface). Consequently, it is possible to cancel out the third bending moment M3 well using the second bending moment M2 by preventing the first side surface 20sa from contacting the surface of the V groove while improving the torque transfer efficiency by compressing the rocking edge 25 using the primary pulley 3 or the like via the second side surface 20sb. It should be noted, however, that the boundary B between the first side surface 20sa and the second side surface 20sb may be formed on both sides, in the width direction, of a certain position in the radial direction of the stacked ring 12 from the top portion T of the saddle surface 23s (convex curved surface) to a bottom portion X (deepest portion; the boundary between the saddle surface 23s and the concave curved surface 24 in the present embodiment). That is, the boundary B may be formed in a space between the line L0, which extends in the width direction of the saddle surface 23s through the top portion T, and a line (not illustrated) that extends in the width direction of the saddle surface 23s through the bottom portion X in the radial direction of the stacked ring 12 (including a location on the line which extends through the bottom portion X). Further, the boundary B between the first and second side surfaces 20sa and 20sb and the rocking edge 25 may not be positioned on the same line.

In addition, the concave curved surface 24 between the saddle surface 23s and the inner surface 22i of the pillar portion 22 is positioned on the outer side in the radial direction of the stacked ring 12 with respect to the crossing point P between the curve C0 which forms the saddle surface 23s and the extension line L1 of the inner surface 22i of the pillar portion 22. Consequently, it is possible to suppress deformation of the pillar portion 22 better by enhancing the rigidity of components around the concave curved surface 24 which connects between the saddle surface 23s and the pillar portion 22, and to further improve the durability of the element 20 by suppressing a stress concentration around a root portion of the pillar portion 22.

As has been described above, the present disclosure provides a power transfer belt (10) that includes a plurality of elements (20) and a ring (12) that binds the plurality of elements (20) annularly. The power transfer belt (10) is wound in V grooves of a pair of pulleys (3, 5) of a continuously variable transmission (1) to transfer power. In the power transfer belt (1), the elements (20) each have a saddle surface (23s) that contacts the ring (12), a pair of pillar portions (22) that extend from both sides of the saddle surface (23s) in a width direction in a direction from an inner peripheral side toward an outer peripheral side of the ring (12), and a pair of side surfaces (20s) formed so as to extend away from each other from the inner peripheral side toward the outer peripheral side of the ring (12). the pair of side surfaces (20s) each include a first side surface (20sa) provided on the pillar portion (22) and a second side surface (20sb) formed so as to be continuous with the first side surface (20sa) and positioned on the inner peripheral side with respect to the first side surface. An angle (θb) formed by a pair of the second side surfaces (20sb) is generally equal to an opening angle (θ0) of the V grooves, and an angle (θa) formed by a pair of the first side surfaces (20sa) is smaller than the angle (θb) formed by the pair of the second side surfaces (20sb).

When power is transferred between the pair of pulleys by the power transfer belt according to the present disclosure, the second side surface of the side surface of each of the elements can be caused to abut against the surface of the V groove, and the first side surface on the pillar portion side can be prevented from contacting the surface of the V groove. Consequently, it is possible to prevent a first bending moment, which acts to lean the pillar portion toward the center in the width direction of the element using the boundary between the first and second side surfaces as a support point, from being substantially generated, by preventing direct application of a force from the pulley to the first side surface, that is, the pillar portion, of each of the elements when power is transferred between the pair of pulleys. With the power transfer belt according to the present disclosure, further, in transferring power, at least a part of a third bending moment can be canceled out using a second bending moment. The third bending moment is based on a force from the ring, and acts to lean the pillar portion toward the center in the width direction of the element using the boundary between the first and second side surfaces as a support point. The second bending moment is based on a force from the pulley that acts on the second side surface, and acts to lean the pillar portion toward the pulley using the boundary between the first and second side surfaces as a support point. As a result, it is possible to improve the durability of the power transfer belt by suppressing deformation of the element, that is, deformation of the pillar portion and accompanying deformation of components around the second side surface, during power transfer.

In addition, the elements (20) may each have a pair of hook portions (22f) that project in the width direction of the saddle surface (23s) from respective free end portions of the pillar portions (22) to face each other, and a retainer ring (15) may be disposed on a radially outer side of the ring (12) and on a radially inner side of the hook portions (22f) of the plurality of elements (20). The retainer ring (15) may have a width that is larger than a spacing between the pair of hook portions (22f) in the width direction, and the retainer ring (15) may be supported from the radially outer side by the hook portions (22f). That is, in the element 20 of the power transfer belt according to the present disclosure, the first side surfaces on the pillar portion side are also formed so as to extend away from each other from the inner peripheral side toward the outer peripheral side of the ring. Thus, the spacing between the free end portions of the pair of pillar portions can be increased. Thus, it is possible to increase the spacing in the width direction between the pair of hook portions even if the amount of overlap between the hook portions and the end portions of the retainer ring (area of overlapping portions of the hook portions and the retainer ring) is secured sufficiently. As a result, the width of the ring, which needs to pass between the pair of hook portions, can be increased, and thus it is possible to further improve the power transfer efficiency of the power transfer belt.

Further, the pair of pillar portions (22) may each have an inner surface (22i) positioned on a center side in the width direction with respect to the first side surface (20sa), and the inner surface (22i) may be formed such that a region of the inner surface (22i) positioned on the outer peripheral side is closer to the first side surface (20sa) than a region of the inner surface (22i) positioned on the inner peripheral side. Consequently, it is possible to further increase the spacing in the width direction between the pair of hook portions while securing a sufficient amount of overlap between the hook portions and the end portions of the retainer ring.

In addition, the elements (20) may each have a rocking edge (25) at which adjacent elements (20) contact each other and which serves as a support point for turning motion of the adjacent elements (20); the saddle surface (23s) may be a convex curved surface with a center portion in the width direction as a top portion (T); and a boundary (B) between the first side surface (20sa) and the second side surface (20sb) may be positioned on the rocking edge (25). Consequently, it is possible to cancel out the third bending moment well using the second bending moment by preventing the first side surface from contacting the surface of the V groove while improving the power transfer efficiency by compressing the rocking edge using the pulley via the second side surface.

Further, the saddle surface (23s) may include a convex curved surface curved outward in the radial direction; and a boundary (B) between the first side surface (20sa) and the second side surface (20sb) may be formed on both sides, in the width direction, of a certain position from a top portion (T) to a bottom portion (T) of the convex curved surface.

In addition, the rocking edge (25) and the boundary (B) may be positioned on a line that extends in the width direction through the top portion (T) of the convex curved surface.

Further, a recessed portion (28) dented toward the saddle surface (23s) may be formed in an inner peripheral end portion of the element (20) between a center portion in the width direction and each of the second side surfaces (20sb). The inner peripheral end portion extends in the width direction on an inner side in the radial direction with respect to the saddle surface (23s). Consequently, the rigidity of a portion of the element on the recessed portion side with respect to the pillar portion can be partially lowered. Thus, it is possible to cancel out a third bending moment well using a second bending moment by increasing the effect of the second bending moment. The third bending moment is based on a force from the ring, and acts to lean the pillar portion toward the center in the width direction of the element using the boundary between the first and second side surfaces as a support point. The second bending moment is based on a force from the pulley that acts on the second side surface, and acts to lean the pillar portion toward the pulley using the boundary between the first and second side surfaces as a support point.,

Further, the recessed portion (28) may be closer to the second side surface (20sb) than to the center portion in the width direction, and a deepest portion (28b) of the recessed portion (28) may be closer to the second side surface (20sb) than to the center portion in the width direction. Consequently, it is possible to increase the effect of the second bending moment which is based on a force from the pulley that acts on the second side surface, and which acts to lean the pillar portion toward the pulley using the boundary between the first and second side surfaces as a support point.

In addition, a deepest portion (28b) of the recessed portion (28) may be positioned on the saddle surface (23s) side with respect to a line (LI) that orthogonally crosses the second side surface (20sb) at an end portion (E), on an innermost peripheral side in the radial direction, of a portion that contacts the pulley (3, 5).

Further, the pillar portions (22) may each have an inner surface (22i) positioned on a center side in the width direction; a concave curved surface (24) may be formed between the saddle surface (23s) and the inner surface (22i) of the pillar portion (22) such that the concave curved surface (24) is continuous with the saddle surface (23s) and the inner surface (22i); and the concave curved surface (24) may be positioned on an outer side in the radial direction with respect to a crossing point (P) between a curve (Co) that forms the saddle surface (23s) and an extension line (LI) of the inner surface (22i) of the pillar portion (22). Consequently, it is possible to suppress deformation of the pillar portion better by enhancing the rigidity of components around the concave curved surface which connects between the saddle surface and the pillar portion, and to further improve the durability of the element by suppressing a stress concentration around a root portion of the pillar portion.

The invention according to the present disclosure is not limited to the embodiment described above in any way, and it is a matter of course that the invention may be modified in various ways without departing from the range of the extension of the present disclosure. Further, the embodiment described above is merely a specific form of the invention described in the "SUMMARY OF THE INVENTION" section, and does not limit the elements of the invention described in the "SUMMARY OF THE INVENTION" section.

### INDUSTRIAL APPLICABILITY

The invention according to the present disclosure is applicable to the power transfer belt and continuously variable transmission manufacturing industry, etc.

## Claims

1. A power transfer belt that includes a plurality of elements and a ring that binds the plurality of elements annularly, the power transfer belt being wound in V grooves of a pair of pulleys of a continuously variable transmission to transfer power, wherein:
the elements each have a saddle surface that contacts the ring, a pair of pillar portions that extend from both sides of the saddle surface in a width direction in a direction from an inner peripheral side toward an outer peripheral side of the ring, and a pair of side surfaces formed so as to extend away from each other from the inner peripheral side toward the outer peripheral side of the ring;
the pair of side surfaces each include a first side surface provided on the pillar portion and a second side surface formed so as to be continuous with the first side surface and positioned on the inner peripheral side with respect to the first side surface; and
an angle formed by a pair of the second side surfaces is generally equal to an opening angle of the V grooves, and an angle formed by a pair of the first side surfaces is smaller than the angle formed by the pair of the second side surfaces.

2. The power transfer belt according to claim 1, wherein:
the elements each have a pair of hook portions that project in the width direction of the saddle surface from respective free end portions of the pillar portions to face each other;
a retainer ring is disposed on a radially outer side of the ring and on a radially inner side of the hook portions of the plurality of elements, the retainer ring having a width that is larger than a spacing between the pair of hook portions in the width direction; and
the retainer ring is supported from the radially outer side by the hook portions.

3. The power transfer belt according to claim 2, wherein
the pair of pillar portions each have an inner surface positioned on a center side in the width direction with respect to the first side surface, and the inner surface is formed such that a region of the inner surface positioned on the outer peripheral side is closer to the first side surface than a region of the inner surface positioned on the inner peripheral side.

4. The power transfer belt according to any one of claims 1 to 3, wherein:
the elements each have a rocking edge at which adjacent elements contact each other and which serves as a support point for turning motion of the adjacent elements; and
a boundary between the first side surface and the second side surface is positioned on the rocking edge.

5. The power transfer belt according to any one of claims 1 to 4, wherein:
the saddle surface includes a convex curved surface curved outward in the radial direction; and
a boundary between the first side surface and the second side surface is formed on both sides, in the width direction, of a certain position from a top portion to a bottom portion of the convex curved surface.

6. The power transfer belt according to claim 5, wherein
the rocking edge and the boundary are positioned on a line that extends in the width direction through the top portion of the convex curved surface.

7. The power transfer belt according to any one of claims 1 to 6, wherein
a recessed portion dented toward the saddle surface is formed in an inner peripheral end portion of the element between a center portion in the width direction and each of the second side surfaces, the inner peripheral end portion extending in the width direction on an inner side in the radial direction with respect to the saddle surface.

8. The power transfer belt according to claim 7, wherein
the recessed portion is closer to the second side surface than to the center portion in the width direction.

9. The power transfer belt according to claim 7 or 8, wherein
a deepest portion of the recessed portion is closer to the second side surface than to the center portion in the width direction.

10. The power transfer belt according to any one of claims 7 to 9, wherein
a deepest portion of the recessed portion is positioned on the saddle surface side with respect to a line that orthogonally crosses the second side surface at an end portion, on an innermost peripheral side in the radial direction, of a portion of the second side surface that contacts the pulley.

11. The power transfer belt according to any one of claims 1 to 10, wherein:
the pillar portions each have an inner surface positioned on a center side in the width direction with respect to the first side surface;
a concave curved surface is formed between the saddle surface and the inner surface of the pillar portion, the concave curved surface being continuous with the saddle surface and the inner surface; and
the concave curved surface is positioned on an outer side in the radial direction with respect to a crossing point between a curve that forms the saddle surface and an extension line of the inner surface of the pillar portion.
